# EUROPEAN PATENT APPLICATION

(11) **EP 3 689 935 A1**
(43) Date of publication of application: **05.08.2020**
(21) Application number: 19460006.0
(22) Date of filing: 30.01.2019
(51) Int. Cl.: C08G 18/66, C08G 18/76, C08G 18/79, C08G 18/08, C08G 18/32, C08G 18/42, C08L 19/00, C08L 75/04, C08L 75/06

(54) **THERMOPLASTIC POLYURETHANE-RUBBER COMPOSITE AND METHOD FOR OBTAINING THERMOPLASTIC POLYURETHANE-RUBBER COMPOSITE**

(71) Applicant: Politechnika Gdanska, 80-233 Gdansk (PL)
(72) Inventor: Sienkiewicz, Maciej, 80-034 Gdansk (PL); Janik, Helena, 80-287 Gdansk (PL); Wiecierzycka, Karolina, 81-361 Gdynia (PL); Pacholec, Dorota, 87-140 Chelmza (PL); Nalecz, Mateusz, 06-415 Czernice Borowe (PL)

(57) **Abstract**

The invention relates to thermoplastic polyurethane-rubber composite. The composite comprises, calculated on the total weight of the composite, from 19 to 90% wt. of thermoplastic polyurethane or thermoplastic cast urethane or thermoplastic polyurethene granulate and from 9.5 to 80% wt. of rubber granulate, and also comprises from 1 to 5% wt. of reactive modifier having in its structure reactive isocyanate or epoxide groups, which are activated at elevated temperature during further processing of the composite in a way of injection molding and/or extrusion. According to further variant of invention, polyurethane-rubber composite comprises, calculated on the weight of the composite, from 10 to 90% wt. of thermoplastic polyurethane or cast polyurethane elastomer with thermoplastic properties and from 10 to 90% wt. of rubber granulate.

## Description

The present invention relates to thermoplastic polyurethane-rubber composites and methods for obtaining them. The invention is used for manufacturing of elastomeric products as well as ready-made consumer goods finally obtained after further processing of the composites by injection molding and/or extrusion.

There are known composites in which as a matrix are used elastomeric materials, natural and synthetic rubbers, and as a filler is use a rubber granulate obtained in the grinding process of post-consumer rubber products, first of all used tires. In the known polymer-rubber composites with the increase in the amount of rubber grains in their composition there is a marked decrease in their mechanical properties, and their processing is based solely on compression molding by press.

Therefore, composites with high mechanical strength and also composites, which are susceptible to further processing by injection molding and extrusion methods are sought for.

In the case of polyurethane composites, as a matrix could be used various types of polyurethanes, such as cast urethane elastomers, polyurethane and polyisocyanate adhesives as well as polyurethane foams or polyurethane rubber vulcanized with sulfur.

The known technologies for the production of materials made of polyurethane-rubber composites have some limitations resulting from the use of highly sensitive to moisture liquid polyurethane adhesives or liquid polyisocyanate binders, which after mixing with granulated rubber, must be immediately processed and used in the production of consumer products. Limitations of known methods for production of products from polyurethane adhesives and waste rubber also result from the technology of their formation, because its are carried out mainly by molding by using press, and thus the scale of their production is determined by the size of the press for molding and the number of forming nests in a mould.

For this reason, with regards to economics of production, a more attractive solution is to replace liquid polyurethane binders or polyurethane adhesives with thermoplastics, which as a matrix of composites, give them thermoplastic properties and processability through injection molding and extrusion techniques, which are classed as the fastest, the most efficient and the cheapest methods for the production of plastic products. From the documents WO2016151301, CN107216544A, WO2008048132A1, PL177682 there are known thermoplastic polymer-rubber composites, obtained using rubber granules from used tires in which the matrix is polyolefins, such as polypropylene (PP) or polyethylene (PE). These composites are processed by extrusion or injection molding , and the content of rubber granulate in these materials can reach up to 80% wt. However the disadvantage of these composite materials is their very low elasticity and mechanical strength, resulting from the use of polyolefins as a matrix. These polymers during stretching or bending have a completely different nature of deformation in relation to the rubber granulate, which causes the cracking of the composite material at the interface between rubber grain and thermoplastic matrix, during its deformation. Nevertheless, these composites are attractive in terms of material manufacturing costs, which results from the use of one of the cheapest thermoplastics to obtain them, so that they are used to produce undercoat or insulating products with negligible mechanical strength.

EP2868453 describes thermoplastic polymer-rubber composites manufactured by extrusion, containing rubber granulates from used tires in the amount up to 80% wt., in which polyethylene terephthalate (PET) is used as a matrix. The problem of compatibility of rubber granulate with the PET matrix and the problem of low elasticity of this type of composites were solved by adding into the composition an additional elastomer component, in the form of an ethylene-propylene-diene termpolymer (EPDM), used in the amount from 1% wt. to 8% wt.

EP2593499 describes a rigid thermoplastic composite material obtained with use a rubber granulate from used tires, which amount in composites is in the range 20-89% wt., a textile cord from tires, used in an amount of 1-30% wt. and a thermoplastic material in the form of poly(vinyl chloride) (PVC) or polypropylene (PP), or polyethylene (PE), or copolymer acrylonitrile-butadiene-styrene (ABS), or polystyrene (PS), used in an amount up to 30% wt. All components of the composite are mixed with the melted thermoplastic material at high temperature in an extruder and formed into a granulate, which is then converted by injection molding into usable products that are characterized by high stiffness and resistance to brittle fracture. This material is characterized by low elasticity, low tensile strength in the range of 1-3 MPa, very low elongation at break of up to 9% and low bending strength of maximum 9 MPa.

The using of thermoplastic materials produced in the world in the largest quantity, i.e. PE, PP, PVC, PET and PS, in polymer-rubber composites, due to their low price brings economic benefits. Unfortunately, these types of composites are still characterized by low elasticity, low tensile strength, bending strength, abrasion resistance and tear strength. For this reason, thermoplastic elastomers with high flexibility and susceptibility to processing by injection molding or extrusion are much more advantageous in using them as the matrix of composites. However, these types of composites are characterized by significantly higher material manufacturing costs compared to composites obtained by using standard thermoplastics such as PE, PP, PS, PVC and PS. However, their mechanical strength and flexibility is much higher, therefore the scope of their application is much wider.

There are known also thermoplastic compositions obtained with the using of rubber granulate from used tires and thermoplastic elastomers mainly in the form of styrene-butadiene-styrene (SBS) copolymers and ethylene-vinyl acetate copolymer (EVA). There are also known elastic composite materials obtained from rubber granulates and thermoplastic polyurethanes with strictly defined content in the composite.
Document CA2205741A1 discloses a method of obtaining by injection-molding thermoplastic composite that is consisted of: from 5% wt. up to 90% wt. rubber granulate, from 5% wt. up to 60% wt. polyolefins (PE, PP, ethylene-propylene copolymer(EPR)), from 2% wt. up to 30% wt. thermoplastic elastomer in the form of SBS copolymer and from 2% wt. up to 30% wt. thermoplastic elastomer in the form of ethylene-vinyl acetate copolymer (EVA). Composites of this type are characterized by excellent elasticity, however, satisfactory tensile and tear strength can be achieved in these materials by using rubber granulate in an amount of up to 50% wt.
According to document WO2008 / 083451, the increase in the mechanical strength of the composites obtained from the rubber granulate and styrene-butadiene styrene block copolymer (SBS) can occur as a result of their additional cross-linking by sulfur or peroxide vulcanizing agents. In this way, it is possible to obtain an elastomeric material useful in the production of shoe soles by compression molding. Unfortunately, this type of material, due to the high degree of cross-linking, is not suitable for processing by injection molding or extrusion.
Document US20150267045 discloses the method for obtaining a thermoplastic composite material from a rubber granulate comes from tire recycling processes, from natural or synthetic rubber (mainly ethylene-propylene diene terpolymer) and many types of polymer bases. The method of obtaining these composite materials runs in several stages. In the case of all varieties of composites obtained with the using of polyurethanes, in the first step is prepared an elastomer base consisting of natural rubber used in an amount of 3% wt. or EPDM rubber used in an amount of 25% wt. Then rubber granulates, from used tires, in an amount not exceeding 25% wt., or a mixture of rubber granulates and other types of powder fillers are added to the elastomer base and the whole mixture is mixed in a internal mixer for about an hour. In the next step, a chemosettings liquid polyurethane resin or a thermoplastic polyurethane granulate in amounts of not less than 50% wt. is added to the obtained elastomers mixture and after mixing, the whole mixture is carried to the extruder in order to thoroughly mixing the polyurethane with the rubber-elastomer base mixture and to form a thermoplastic elastomer granulate, which can be processed by injection molding. The amount of rubber granulate in this type of polyurethane-rubber composites does not exceed 25% wt., while the amount of polyurethane is very high and maintained at a level above 50% wt., which significantly increases the costs of production these kinds of composites.
The disadvantage of this method of composites production is the very long time of their preparation, which results from to the need for preparation of the elastomer base consisting of rubber (NR or EPDM) and rubber granulate. In addition, the polyurethane-rubber composites thus obtained have a low melt flow rate, which significantly hinder their injection molding process, especially in the case of thin-walled products. The method of lowering this index indicated in the document is to increase the amount of EPDM rubber in the composition, at the expense of the amount of rubber granulate, which significantly increases the cost of their production.
Document WO2005073307 discloses a method for obtaining thermoplastic polyurethane-rubber composites by extrusion process, which, in addition to the thermoplastic polyurethane used in the form of granulate in an amount of 20-70% wt. and rubber granulate used in an amount of 30-60% wt., contain a dispersing agent in the form of copolymers of ethylene or acrylates, preferably an ethylene-vinyl acetate copolymer (EVA), used in an amount of 10% wt. up to 20% wt. Composites obtained in this way at the content of rubber granulate up to approx. 60% wt., are characterized by tensile strength approx. 5.5 MPa and elongation at break of about 280%. Their strength can be increased by the addition of peroxide crosslinkers, however, the use of peroxides may involve uncontrolled processes of decomposition of the macromolecules of composites components. Moreover, the use of peroxides during the preparation of composites in an extruder causes their irreversible cross-linking, as a result of which they cannot be processed into consumer goods, e.g. by injection molding, after being produced by the extrusion process. Improving a strength of composites can also take place as a result of adding into their composition various types of synthetic or natural fibers, up to 30% wt. However, the disadvantage of this is the lowering the melt flow rates of composite materials obtained in this way. For this reason the extrusion and injection molding process of these composites can be very hard. In addition, adding fibers causes the composites to stiffen and their elasticity is reduce.

Due to the their useful properties, polymer-rubber composites in which the matrix is made of polyurethanes set interest of the inventors. Such composites have a diversified chemical structure, which provides mechanical strength, flexibility, abrasion resistance, resistance for environment factors and water, and considerable resistance to dilute acids and bases, organic solvents as well as oils and greases. In addition, polyurethanes, as well as polyurethane-rubber composites are also characterized by diversified chemical structure and supramolecular structure, which gives the possibility of modifying and designing these materials for specific applications at the stage of their synthesis. Polyurethanes production is simple, and they are distinguished by a diverse number of methods of obtaining them. During the research performed by the inventors of the present invention, it has been found that the selection of appropriate proportions of composites components and the use of appropriate matrix components of composites such as cast polyurethane elastomers (with thermoplastic properties) or thermoplastic polyurethanes improves the mechanical properties of composites, in compare to known rubber-polymer composites, and at the same time, it ensures their high flexibility, abrasion resistance, high elongation at break and satisfactory tensile strength. The best properties were observed using a cast polyurethane elastomers with thermoplastic properties, which was synthesized at a molar ratio of NCO/OH close to 1/1. Moreover, recycled thermoplastics polyurethane can be used as a matrix, which significantly reduces the cost of manufacturing of products from polyurethane-rubber composites and increases their market attractiveness. In addition, mixtures of urethane-rubber granulates or compositions composed with thermoplastic polyurethanes and rubber granules are not sensitive to moisture and can be stored and transported under normal conditions such as for standard thermoplastics materials.
During the research it was also found that the addition of isocyanate or epoxy reactive compounds named reactive modifiers to the composite comprises casted urethane elastomers with thermoplastic properties or thermoplastic polyurethanes and rubber granulate, significantly improves the mechanical properties of polyurethane-rubber thermoplastic composite by increasing the degree of interaction of polyurethane with rubber granulate, by means of reactive isocyanate or epoxide groups reacting with OH, NH, NCO groups occurring in the polyurethane structure and OH, SH, NH and COOH groups present in the rubber structure.
By using the selected raw materials in chosen proportions, and in a preferred embodiment by using the special modifiers, it is possible to create, at the stage of forming composite products, a chemical bonds between polyurethane and rubber or a polymer network with low crosslinking density, which is made by polyurethane macromolecules bonded by the modifiers. Because the degree of crosslinking density of the polyurethane matrix in this case is very low, it is possible to reprocess the composites by injection molding or extrusion. Therefore, the use of these reactive modifiers does not inhibit the recycling process of composite products, e.g. by reprocessing composite products after their use. Reactive modifiers, added to composites, improve the adhesion of rubber to polyurethane, especially when they are use at selected proportions in the composite. These modifiers are non-volatile and therefore safe for workers, who will produce the composites and for the users of products made of them. Furthermore, according to the invention, these compounds are only activated in the composite under the processing conditions of composites, i.e. when heated to temperatures above 100°C, therefore, according to the invention, polyurethane-rubber mixtures or composites granulates from polyurethane-rubber composites are completely stable before being processed and can be stored in standard conditions, like other types of thermoplastics.

According to the invention, thermoplastic polyurethane-rubber composite comprises thermoplastic polyurethane, including thermoplastic polyurethanes derived from the recycling processes (eg. shoe soles, cable insulation, bumpers, elastic wheels and others) of polyurethane products and rubber granulate produced in the recycling processes of used tires.
According to the first main embodiment, the composite contains reactive compounds - modifiers containing isocyanate or epoxy groups, that are activated at an elevated temperature under the conditions of injection molding or extrusion of composites products and whose function is a improvement the interaction of the rubber with polyurethane and a improvement the processing and mechanical properties of the composites. Composites contains (calculated on weight of polyurethane-rubber composite), from 10% wt. to 90% wt. thermoplastic polyurethane or cast urethane elastomer and from 10% wt. to 90% wt. rubber granulate. The presented amounts refer to the listed ingredients in the composites. According to the second main embodiment the composite contains from 19% wt. up to 90% wt. thermoplastic polyurethane or cast urethane elastomer and from 9.5% wt. to 80% wt. rubber granulate, and additionally from 1% wt. to 5% wt. a reactive modifier, in the form of a solid compound containing isocyanate groups (NCO) or in the form of a solid epoxy resin, preferably having a melting point above 75°C, containing epoxide groups in an amount above 0.12 mol per 100 g of modifier. The given amounts refer to the listed ingredients in the composite.
According to the embodiment the composites contain waste rubber particle, obtained from recycling of post-consumer tires.
According to the embodiment, the composites contain waste rubber particle, in form of rubber granulate with size of grains equal or below 1 mm.
According to the embodiment, the composites contain thermoplastic polyurethane susceptible to processing by extrusion in the temperature range 100-250°C, in particular characterized by a melt flow index (MFI) equal or above 2 g/10 min measured at 180°C, under a load of 2.16 kg and/or a thermoplastic polyurethane susceptible to processing by injection molding, in the temperature range 150-250°C, in particular characterized by a melt flow index not lower than 25 g/10 min measured at 200°C, under a load of 2.16 kg
According to the embodiment, the composites contain cast urethane elastomer with thermoplastic properties, with a melt flow index equal or above 2 g/10 min, measured at a load of 2.16 kg at 200°C, synthesized with molar ratio of NCO/OH groups in the range from 0.95/1 to 1.2/1 from an oligodiol e.g. α,ω-dihydroxy [oligo(ethylene-butylene adipate)] (OABE) with a molecular weight of 2000 g/mol and an aromatic diisocyanate, e.g. 4,4'-diphenylmethane diisocyanate (MDI) with a molecular weight of 250 g/mol, and a low molecular weight glycol, e.g. 1,4 butanediol (BDO) with a molecular weight of 90.12 g/mol. The oligodiol (OABE) content in the cast urethane elastomer is in the range from 56.1% wt. to 56.9% wt. and the diisocyanate (MDI) content is in the range from 33.8% wt. to 34.2% wt., while the content of 1,4-butanediol (BDO) is in the range from 8.9% wt. to 10.1% wt. These amounts were calculated on the total weight of the cast urethane elastomer.
According to the embodiment, the composites contain thermoplastic polyurethane with a melt flow rate equal or above 20 g/10min at 200°C, susceptible to extrusion in a temperature range of 100-250°C and/or a thermoplastic polyurethane susceptible to injection molding process, in the temperature range 180-250°C, in the form of regranulate obtained in grinding process of post-consumer products made of thermoplastic polyurethane such as, for example, shoe soles, gaskets, elastic clutches, vibro-shock absorbers, cables insulation, bumpers, elastic wheels and other and/or obtained as a result of the grinding of waste products obtained during the production of these polyurethane products. In particular, polyester urethane and polyether urethane and polyester-etherurethane, polyurethane-urea and others are used.
According to the embodiment, as a reactive modifier of the composites, containing reactive isocyanate groups, 1,3-Bis(3-isocyanato-4-methylphenyl)-1,3-diazetidin-2,4-dion is used, that is a difunctional isocyanate (M-IZO), which is a dimer of toluene 2,4-diisocyanate (TDI), which up to 130°C acts as a difunctional isocyanate, while above 130°C it decompose into two TDI molecules and becomes a tetrafunctional modifier. Therefore, it is possible to increase the functionality of this product by heating the composites above 130°C. The isocyanate modifier is a non-volatile white powder with a molecular weight of 348.3 g/mol and a melting point of 145°C and an unbound TDI content in this modifier is less than 0.1 wt. %. The reactive isocyanate modifier contains also 1% wt. pyrogenic silica, which is use to preventing its agglomeration. In composites materials its chemical activation against rubber and polyurethane occurs only after its melting, i.e. above 145°C.
According to the embodiment, as a reactive modifier of the composites, the modifier contains reactive epoxy groups, a solid epoxy resin (M-EPOXY) is used, preferably a solid, epoxy adhesive, heat curing at a temperature above 120°C, with an epoxide number in range 0.19-0.23 mol/100 g . The present invention also applies epoxy powder resins (used for production powder coatings) with an epoxide number in the range of 0.12-0.17 mol / 100g and a with softening point in the range of 75-90°C.
Thermoplastic polyurethane-rubber composites, according to the invention, comprises rubber granulate from used tires and cast polyurethane elastomer (with thermoplastic properties) or standard thermoplastic polyurethane, or a regranulate of thermoplastic polyurethane obtained in the recycling process of elastic polyurethane products manufactured by extrusion or injection molding.
The method for preparation of polyurethane-rubber composite according to the invention includes the following stages.
- In the first stage, by using conventional mechanical mixers, rubber granulate with a grains size equal or below 1 mm, used in an amount from 10% wt. to 90% wt. (calculated on the total weight of composites), is mixed at room temperature with granulate of cast polyurethane elastomer (with thermoplastic properties) or granulate of standard thermoplastic polyurethane, with grains size equal or below 10 mm, which were used in the amount from 10% wt. to 90% wt. (calculated on the total weight of composites).
- In the second stage, thus obtained polyurethane-rubber mixtures (mixtures of granulates) can be immediately processing by injection molding to producing usable products, at the temperature of the injection molding process in the range 180-250°C, or immediately processing by extrusion, to producing usable products, by using conventional extruders, especially single-screw or twin-screws, at the temperature of die head and the plasticizing zones of the extruders in the range from 100°C to 250°C.
In the first step, a granular unbound rubber powder mixture with polyurethane granules (granular powder mix) is obtained. In a second step, an injection molding or extrusion process is carried out, in which the polyurethane matrix melts and undergoes to a plastic-liquid state, and in this state the polyurethane bond the rubber granulate and under a pressure this plastic mass is formed to the specific products, either in the injection mould or in the extruder die head.

The method for preparation polyurethane-rubber composite from cast urethane elastomers according to another variant of the invention is based on the following stages.
- In the first stage by using conventional mechanical mixers, rubber granulate, in an amount of up to 70% wt., (calculated on the total weight of the composites), preferably from 50% wt. to 70% wt. is mixed at room temperature with low molecular weight glycol, e.g. 1,4-butanediol, used in an amount of up to 5.1% wt., (calculated on the total weight of the composites), preferably from 2.7% wt. up to 5.1% wt. and mixing is carried out until the rubber granules are completely covered with low molecular weight glycol. Then to the mixture it is being added, with constant mixing, pre-heated to 60°C, the liquid urethane prepolymer in amount of up to 46% wt., (calculated on the total weight of composite), preferably in the amount from 27% wt. to 46% wt., the amount of unbound NCO groups in used urethane prepolymer is above 8% wt., preferably the NCO content in prepolymer is in the range of 8-10% wt. In a preferred embodiment, the liquid urethane prepolymer is synthesized from an aromatic diisocyanate, e.g. 4,4 '-Diphenylmethane diisocyanate (MDI), which is used in an amount from 32.3% wt. to 37.6% wt. (calculated on the total weight of prepolymer) and an oligodiol e.g. α,ω-dihydroxy [oligo (butylene-ethylene adipate)] (OABE) used in an amount from 62.4% wt. to 67.7% wt.(calculated on the total weight of prepolymer). In the embodiment, the cast urethane elastomer is synthesized in situ in a mixture with a rubber granulate, in reaction of 1,4-butanediol with a urethane prepolymer - a mixture of oligodiol and aromatic diisocyanate.
According to the embodiment, where a cast urethane elastomer is used, this elastomer is synthesized in a mixture with a rubber granulate, from the urethane prepolymer which is in the first stage mixed with 1,4-butanediol and then with a rubber granulate. In the second stage, obtained polyurethane-rubber mixtures, what means xixture of rubber granulate with cast polyurethane which is formed in reaction between glycol and urethane prepolymer, from a cast polyurethane elastomer after 24 hours of curing, at 80-100°C, are granulated - grinded, in a classical knife mill for the grains with size of not more than 10 mm and this granulate can be immediately processing by injection molding into composite products. In this case the temperature of the injection molding processing is in the range of 180-250°C, or cast urethane-rubber granulate is processing by extrusion into composite products, by using classic single screw or twin screw extruders, while the temperature of die head and the plasticizing zones of the extruder is in the range from 100°C to 250°C.

According to the invention, the method of preparing thermoplastic polyurethane-rubber composite from standard thermoplastic polyurethanes includes the following stages.
In the first stage, by using a mechanical mixer, at room temperature, the rubber granulate, used in an amount above 50% wt., preferably in an amount from 50% wt. to 80% wt., (calculated on the weight of composite) is mixed with a thermoplastic polyurethane granulate, used in an amount of less than 50% wt., preferably in an amount of 20% wt. up to 50% wt., calculated on the weight of composite. Then the obtained mixtures are homogenized using a twin screw extruder, e.g. a co-rotating twin screw extruder with an L/D equal to 22 and a screw diameter of 20 mm, while maintaining the temperature of die head and the plasticizing zones of extruder in the range from 100°C to 250°C and the rotational speed of 50 - 100 rpm. As a result of extruding is obtained a polyurethane-rubber extrudate, which is then subjected grinding with using a granulator, e.g. knife granulator, to a homogeneous polyurethane-rubber granulate with a grain size of no more than 10 mm. In the second stage, the resulting polyurethane-rubber granulate are immediately processing by injection molding into composite products, and the temperature of the injection molding process is rate in the range of 180-250°C.

The method for the preparation thermoplastic polyurethane-rubber composites modified by isocyanate or epoxy reactive compounds according to another variant of the invention is based on the following stages.
In the first stage, by using conventional mechanical mixers, rubber granulate with a grains size equal or below 1 mm, used in an amount from 9.5% wt. up to 80% wt. (calculated on the total weight of composite), is mixed with used in amount from 1% wt. to 5% wt., of the total weight of composite, a reactive modifier in the form of a compound containing isocyanate groups (NCO) in an amount from 24.1% wt. up to 48.2% wt. of the total weight of modifier and/or in the form of a compound containing epoxide groups in an amount above 0.12 mol per 100 g of modifier. The mixture obtained in this way is also mixed with a granulate of thermoplastic polyurethane or granulate of cast polyurethane elastomer (with thermoplastic properties) used in an amount from 19% wt. up to 90% wt., calculated on the weight of the composite, with a particle size equal or below 10 mm.
In the second stage, thus obtained polyurethane-rubber mixtures (mixtures of granulates and modifier) can be immediately processing by injection molding to producing usable products, at the temperature of the injection molding process in the range 180-250°C, or immediately processing by extrusion, to producing usable products, by using conventional extruders, especially single-screw or twin-screws, at the temperature of die head and the plasticizing zones of the extruders in the range from 100°C to 250°C.

The method for preparation of thermoplastic polyurethane-rubber composite modified with isocyanate or epoxy reactive compounds according to another variant of the invention is based on the following stages.
In the first stage, a granulate of thermoplastic polyurethane, with a grain size of up to 5 mm, in an amount from 19% wt. to 90% wt., calculated on the total weight of composite, is mixed by using conventional mechanical mixers with a rubber granulate, which grain size equal or below 1 mm, used in an amount from 9.5% wt. to 80% wt., calculated on the total weight of composite, and the obtained mixtures of granulates are homogenized by using conventional single screw or twin screws extruders, at the temperature of die head and the plasticizing zones of the extruders in the range from 100°C to 250°C. As a result of extruding is obtained a polyurethane-rubber extrudate, which is then subjected grinding with using a granulator, e.g. knife granulator, to a homogeneous polyurethane-rubber granulate with a grain size of no more than 5 mm.
The polyurethane-rubber granulate obtained in the first stage is then mixed, by using conventional mechanical mixers, with a reactive modifier containing isocyanate groups or epoxide groups, used in an amount of 1% wt. up to 5% wt., calculated on the total weight of composite. In the next stage (second stage), thus obtained polyurethane-rubber mixtures (mixtures of granulates and modifiers) can be immediately processing by injection molding to producing usable products, at the temperature of the injection molding process in the range 180-250°C, or immediately processing by extrusion, to producing usable products, by using conventional extruders, especially single-screw or twin-screws, at the temperature of die head and the plasticizing zones of the extruders in the range from 100°C to 250°C.

The invention enables to obtain the polyurethane-rubber composites in the form of a granulate or a mixture of granulates, completely stable during a storage, which can then be used in the manufacture the products by extrusion or injection molding methods, which are classed as the fastest, the most efficient, fully automated and the cheapest methods for the production of plastic products.
Due to invention, it is possible to eliminate from the production process of polyurethane-rubber composite products, an energy-intensive and labor-intensive methods of compression molding, commonly used in the production of polyurethane-rubber goods, in which the rubber granulate is bonded by moisture-sensitive liquid polyurethane adhesives. The method of obtaining and a composition of thermoplastic polyurethane-rubber composites allows to improve production speed and reduce the costs of manufacturing of products made from polyurethane and rubber materials, such as elastic paving blocks, playgrounds and sports mats, flexible bumpers, road infrastructure components (road signs, traffic cones and barriers separating the traffic belts), elastic wheels for garbage cans and transport trolleys, elastic shoe soles and others.

The crucial point of the preferred embodiment of the invention is use, in process of preparation thermoplastic polyurethane-rubber composites, the additional modifiers in the form of isocyanate or epoxide reactive compounds under the influence of which increases the degree of interaction of polyurethane with rubber granulate, via the reactive groups (isocyanate and/or epoxy) present in their structure. Reactive compounds improving adhesion of rubber to polyurethane are not volatile and therefore safe for processors of composites and users of products made of them. In addition, these compounds are activated only under the conditions of extrusion or molding (in injection molding process) of composites, i.e. as a result of their heating to temperatures above 100°C, therefore the polyurethane-rubber mixture with selected modifiers before molding is completely stable and can be stored without fear of activating the modifiers of composites during storage.

The invention is presented in the embodiments described below.

### Example 1

In example 1 thermoplastic polyurethane-rubber composite was obtained by using:
- thermoplastic polyurethane, in the form of a granulate with a melt flow index of about 25g/10 min (200°C; 10 kg), e.g. LARIPUR 9025, the manufacturer Coim (Italy)
- rubber granulate, obtained in the process of grinding of post-consumer rubber products, in particular used tires, with a grains size equal or below 1 mm, e.g. producer Gumeko Sp. z o.o.,

The method for preparation of 1000g polyurethane-rubber thermoplastic composite, according to example 1, included two stages:
In the first stage, rubber granulate in the amount of 100 g, which was 10% wt. (calculated on the total weight of thermoplastic polyurethane-rubber composite) was mixed, by using conventional mechanical mixer, at room temperature with thermoplastic polyurethane granulate used in an amount of 900 g, which was 90% wt., of the total weight of composite. In the first stage, a granular unbound polyurethane-rubber powder mixture is obtained, this mixture cannot be formed into composite products without the use of injection molding or extrusion processes, in which the polyurethane matrix melts into a plastic-liquid state and this plastic mass bond the rubber grains, in the plasticizing zones of the extruders or injection molding machines, and after molding (in injection molding process or in the extruder die-head) and after cool it down to ambient temperature this plastic mass is formed to useful solid products.
In the second stage, the obtained polyurethane-rubber mixtures were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 1 are presented in table 1.

### Example 2

The method for preparation of the 1000 g of the polyurethane-rubber thermoplastic composite according to example 2 was carried out in the same manner, in two stages and using the same materials as described in example 1, except that the content of the rubber granulate in the composition was 500 g, which was 50% wt. of the total weight of composite, while the content of thermoplastic polyurethane was 500 g, which was 50% wt. of the total weight of composite. The mechanical properties of the polyurethane-rubber composite obtained in example 2 are presented in table 1.

### Example 3

The method for preparation of the 1000 g of the polyurethane-rubber thermoplastic composite according to example 3 was carried out in the same manner, in two stages and using the same materials as described in example 1, except that the content of the rubber granulate in the composition was 800 g, which was 80% wt. of the total weight of composite, while the content of granulated cast polyurethane was 200 g, which was 20% wt. of the total weight of composite. The mechanical properties of the polyurethane-rubber composite obtained in example 6 are presented in table 1.

### Example 4

The method for preparation of the 1000 g of the polyurethane-rubber thermoplastic composite according to example 4 was carried out in the same manner, in two stages as described in example 1, except that the product APILON 52D 30L is used as a thermoplastic polyurethane, in the form of a granulate with a mass flow rate of approximately 9 g/10min (205°C, 2.16 kg), e.g. API API SpA (Italy) and the content of the rubber granulate in the composition was 900 g, which was 90% wt. of the total weight of composite, while the content of thermoplastic polyurethane was 100 g, which was 10% wt. of the total weight of composite. The mechanical properties of the polyurethane-rubber composite obtained in example 4 are presented in table 1.

### Example 5

To prepare thermoplastic polyurethane-rubber composite in the example 5, following materials were used
- cast polyurethane elastomer (LEU) with thermoplastic properties, in the form of granulate with a grain size equal or below 10 mm, synthesized at a molar ratio of NCO/OH groups of 0.95/1, by using: α,ω-dihydroxy[oligo(ethylene-butylene adipate)] (e.g. Polios 55/20, producer Purinova), with a molecular weight of 2000 g/mol, 4,4'-diphenylmethane diisocyanate (e.g., Ongronat 3800, produced by BorsodChem) with a molecular weight of 250 g/mol and 1,4 butanediol (eg producer Brenntag Polska Sp. Z oo) with a molecular weight of 90.12 g/mol, the amount of the oligoester diol (eg Polios55/20) in the cast urethane elastomer was 56.1% wt. and the diisocyanate content (e.g. Ongronat 3800) was 33.8% wt., while the content of 1,4-butanediol was 10.1% wt.
- rubber granulate, obtained in the process of grinding of post-consumer rubber products, in particular used tires, with a grains size equal or below 1 mm, e.g. producer Gumeko Sp. z o.o.,
The method for preparation of 1000g polyurethane-rubber thermoplastic composite, according to example 5, included two stages:
In the first stage, rubber granulate in the amount of 500 g, which was 50% wt. (calculated on the total weight of thermoplastic polyurethane-rubber composite) was mixed, by using conventional mechanical mixer, at room temperature with granulate of cast polyurethane (LEU) used in an amount of 500 g, which was 50% wt., of the total weight of composite.
In the second stage, the obtained polyurethane-rubber mixtures were injection molded by using an injection molding machine, e.g. Battenfeld HM 45/130 B6E. In this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 5 are presented in table 1.

### Example 6

The method for preparation of the 1000 g of the polyurethane-rubber thermoplastic composite according to example 6 was carried out in the same manner, in two stages and using the same materials as described in example 5, except that the content of the rubber granulate in the composition was 800 g, which was 80% wt. of the total weight of composite, while the content of granulated cast polyurethane elastomer (LEU) was 200 g, which was 20% wt. of the total weight of composite. The mechanical properties of the polyurethane-rubber composite obtained in example 6 are presented in table 1.

### Example 7

The method for preparation of the 1000 g of the polyurethane-rubber thermoplastic composite according to example 7 was carried out in the same manner, in two stages and using the same proportions of components in the composite as described in example 5, except that a granulate of cast polyurethane elastomer which was used to obtain the composite was synthesized with a molar ratio of NCO/OH groups of 1.0/1, and the content of the oligoester diol in the cast polyurethane elastomer (eg Polios55 / 20) was 56.4% wt., the diisocyanate content (e.g., Ongronat 3800) was 33.9% wt., while the content of 1,4-butanediol was 9.7% wt. The mechanical properties of the polyurethane-rubber composite obtained in example 6 are presented in table 1.

### Example 8

The method for preparation of the 1000 g of the polyurethane-rubber thermoplastic composite according to example 8 was carried out in the same manner, in two stages and using the same materials as described in example 7, except that the content of the rubber granulate in the composition is 800 g, which was 80% wt. of the total weight of composite, while the content of granulated cast polyurethane elastomer (LEU) was 200 g, which was 20% wt. of the total weight of composite. The mechanical properties of the polyurethane-rubber composite obtained in example 8 are presented in table 1.

### Example 9

The method for preparation of the 1000 g of the polyurethane-rubber thermoplastic composite according to example 9 was carried out in the same manner, in two stages and using the same proportions of components in the composite as described in examples 5 and 7, except that a granulate of cast polyurethane elastomer which was used to obtain the composite was synthesized with a molar ratio of NCO/OH groups of 1.1/1, and the content of the oligoester diol in the cast polyurethane elastomer (eg Polios55/20) was 56.9% wt., the diisocyanate content (e.g., Ongronat 3800) was 34.2% wt., while the content of 1,4-butanediol was 8.9% wt. The mechanical properties of the polyurethane-rubber composite obtained in example 9 are presented in table 1.

### Example 10

The method for preparation of the 1000 g of the polyurethane-rubber thermoplastic composite according to example 10 was carried out in the same manner, in two stages and using the same materials as described in example 9, except that the content of the rubber granulate in the composition was 800 g, which is 80% wt. of the total weight of composite, while the content of granulated cast polyurethane elastomer (LEU) was 200 g, which was 20% wt. of the total weight of composite and while the temperature of plasticizing zones and the nozzle was in the range of 180-250°C. The mechanical properties of the polyurethane-rubber composite obtained in example 10 are presented in table 1.

### Example 11

The method for preparation of the 1000 g of the polyurethane-rubber thermoplastic composite according to example 11 was carried out in the same manner, in two stages and using the same proportions of components in the composite as described in examples 5,7 and 9, except that a granulate of cast polyurethane elastomer which was used to obtain the composite was synthesized with a molar ratio of NCO/OH groups of 1.2/1, and the content of the oligoester diol in the cast polyurethane elastomer (eg Polios55/20) was 58.3% wt., the diisocyanate content (e.g., Ongronat 3800) was 35.1% wt., while the content of 1,4-butanediol was 6.7% wt. The mechanical properties of the polyurethane-rubber composite obtained in example 11 are presented in table 1.

### Example 12

The method for preparation of the 1000 g of the polyurethane-rubber thermoplastic composite according to example 12 was carried out in the same manner, in two stages and using the same materials as described in example 11, except that the content of the rubber granulate in the composition was 900 g, which is 90% wt. of the total weight of composite, while the content of granulated cast polyurethane elastomer (LEU) was 100 g, which was 10% wt. of the total weight of composite. The mechanical properties of the polyurethane-rubber composite obtained in example 12 are presented in table 1.

### Example 13

To prepare thermoplastic polyurethane-rubber composite in the example 13, following materials were used
- 1,4-butanediol, molecular weight 90.12 g/mol, impurity content below 0.1%, e.g. producer Brenntag Polska Sp. zo.o.;
- urethane prepolymer with a content of unbound isocyanate groups of about 10% wt., synthesized by using: α,ω-dihydroxy[oligo(ethylene-butylene adipate)] (e.g. Polios 55/20, manufacturer Purinova), with a molecular weight of 2000 g/mol and 4,4'-diphenylmethane diisocyanate (e.g., Ongronat 3800, produced by BorsodChem) with a molecular weight of 250 g/mol
- rubber granulate, obtained in the process of grinding of post-consumer rubber products, in particular used tires, with a grains size equal or below 1 mm, e.g. producer Gumeko Sp. z o.o.,

The method for preparation of 1000g polyurethane-rubber thermoplastic composite, according to example 13, included two stages:
In the first stage, rubber granulate in the amount of 500 g, which was 50% wt. (calculated on the total weight of thermoplastic polyurethane-rubber composite) was mixed, by using conventional mechanical mixer, at room temperature with 1,4-butanediol used in an amount of 51g, which was 5.1% wt. of the total weight of composite. Mixing was continued until the rubber granulate was completely covered by 1,4-butanediol, and then 449 g of a urethane pre-polymer, heated to 60°C, was added to the mixture thus obtained, what was 44.9% wt. of the total mass of the composite. The amounts of prepolymer and 4,4-butanediol were chosen in such a way that the molar ratio of the NCO/OH groups of the polyurethane matrix of the composite was about 0.95/1.
In the second stage, the polyurethane-rubber mixtures thus obtained, after 24 hours of curing at 80-100°C were grinded with use granulator, e.g. a knife granulator and in this process was obtained the polyurethane-rubber granulate with a grains size equal or below 10 mm. Than the granulate were injection molded by using an injection molding machine, e.g. Battenfeld HM 45/130 B6E. In this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 13 are presented in table 1.

### Example 14

The method for preparation of the 1000 g of the polyurethane-rubber thermoplastic composite according to example 14 was carried out in the same manner, in two stages and using the same materials as described in example 13, except that the content of the rubber granulate in the composition was 700 g, which is 70% wt. of the total weight of composite, while the content of 1,4-butanediol was 30 g, which is 3% wt. of the total weight of the composite, and the urethane prepolymer content was 270 g, which was 27% wt. of the total weight of the composite. The mechanical properties of the polyurethane-rubber composite obtained in example 14 are presented in table 1.

### Example 15

The method for preparation of the 1000 g of the polyurethane-rubber thermoplastic composite according to example 15 was carried out in the same manner, in two stages and using the same materials as described in example 13, except that the content of the rubber granulate in the composition was 500 g, which is 50% wt. of the total weight of composite, while the content of 1,4-butanediol was 48 g, which is 4.8% wt. of the total weight of the composite, and the urethane prepolymer content was 452 g, which was 45.2% wt. of the total weight of the composite. The mechanical properties of the polyurethane-rubber composite obtained in example 15 are presented in table 1.

### Example 16

The method for preparation of the 1000 g of the polyurethane-rubber thermoplastic composite according to example 16 was carried out in the same manner, in two stages and using the same materials as described in example 13, except that the content of the rubber granulate in the composition was 700 g, which is 70% wt. of the total weight of composite, while the content of 1,4-butanediol was 29 g, which is 2.9% wt. of the total weight of the composite, and the urethane prepolymer content was 271 g, which was 27.1% wt. of the total weight of the composite. Beside this the amounts of prepolymer and 1,4-butanediol were chosen in such a way that the molar ratio of the NCO/OH groups of the polyurethane matrix of the composite was approx. 1.0/1. The mechanical properties of the polyurethane-rubber composite obtained in example 16 are presented in table 1.

### Example 17

The method for preparation of the 1000 g of the polyurethane-rubber thermoplastic composite according to example 17 was carried out in the same manner, in two stages and using the same materials as described in example 13, except that the content of the rubber granulate in the composition was 500 g, which is 50% wt. of the total weight of composite, while the content of 1,4-butanediol was 44 g, which is 4.4% wt. of the total weight of the composite, and the urethane prepolymer content was 456 g, which was 45.6% wt. of the total weight of the composite. Beside this the amounts of prepolymer and 1,4-butanediol were chosen in such a way that the molar ratio of the NCO/OH groups of the polyurethane matrix of the composite was approx. 1.1/1. The mechanical properties of the polyurethane-rubber composite obtained in example 17 are presented in table 1.

### Example 18

The method for preparation of the 1000 g of the polyurethane-rubber thermoplastic composite according to example 18 was carried out in the same manner, in two stages and using the same materials as described in example 13, except that the content of the rubber granulate in the composition was 700 g, which is 70% wt. of the total weight of composite, while the content of 1,4-butanediol was 27 g, which is 2.7% wt. of the total weight of the composite, and the urethane prepolymer content was 273 g, which was 27.3% wt. of the total weight of the composite. Beside this the amounts of prepolymer and 1,4-butanediol were chosen in such a way that the molar ratio of the NCO/OH groups of the polyurethane matrix of the composite was approx. 1.1/1. The mechanical properties of the polyurethane-rubber composite obtained in example 18 are presented in table 1.

### Example 19

The method for preparation of the 1000 g of the polyurethane-rubber thermoplastic composite according to example 19 was carried out in the same manner, in two stages and using the same materials as described in example 13, except that the content of the rubber granulate in the composition was 700 g, which is 70% wt. of the total weight of composite, while the content of 1,4-butanediol was 25 g, which is 2.5% wt. of the total weight of the composite, and the urethane prepolymer content was 275 g, which was 27.5% wt. of the total weight of the composite. Beside this the amounts of prepolymer and 1,4-butanediol were chosen in such a way that the molar ratio of the NCO/OH groups of the polyurethane matrix of the composite was approx. 1.2/1.

The order of the mixing of components was also different from that of examples 13-18. In example 19, 700 g of the rubber granulate was first mixed with 275 g of the urethane prepolymer, and after mixing 25 g of 1,4-butanediol was added to the thus-formed mixture and mixed again.

In the second stage, the polyurethane-rubber mixtures thus obtained, after 24 hours of curing at 80-100°C were grinded with use granulator, e.g. a knife granulator and in this process was obtained the polyurethane-rubber granulate with a grains size equal or below 10 mm. Than the granulate were injection molded by using an injection molding machine, e.g. Battenfeld HM 45/130 B6E. In this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 19 are presented in table 1.

### Example 20

In example 20. thermoplastic polyurethane-rubber composite was obtained by using:
- thermoplastic polyurethane regranulate, with hardness 75 Sh A, obtained in the grinding proces of post-consumer cable insulation, with grains size in the range 6-8 mm, and with a melt flow index over 2 g/10min (200°C, 2.16kg), e.g. producer SIGLO (Poland) .
- rubber granulate, obtained in the process of grinding of post-consumer rubber products, in particular used tires, with a grains size equal or below 1 mm, e.g. producer Gumeko Sp. z o.o.,

The method for preparation of 1000g polyurethane-rubber thermoplastic composite, according to example 20, included two stages:
In the first stage, rubber granulate in the amount of 100 g, which was 10% wt. (calculated on the total weight of thermoplastic polyurethane-rubber composite) was mixed, by using conventional mechanical mixer, at room temperature with thermoplastic polyurethane regranulate used in an amount of 900 g, which was 90% wt., of the total weight of composite.
In the second stage, the obtained polyurethane-rubber mixtures were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 20 are presented in table 1.

### Example 21

The method for preparation of the 1000 g of the polyurethane-rubber thermoplastic composite according to example 21 was carried out in the same manner, in two stages and using the same materials as described in example 20, except that the content of the rubber granulate in the composition was 500 g, which is 50% wt. of the total weight of composite, while the content of thermoplastic polyurethane regranulate was 500 g, which was 50% wt. of the total weight of composite. The mechanical properties of the polyurethane-rubber composite obtained in example 21 are presented in table 1.

### Example 22

The method for preparation of the 1000 g of the polyurethane-rubber thermoplastic composite according to example 22 was carried out in the same manner, in two stages and using the same materials as described in example 20, except that the content of the rubber granulate in the composition was 800 g, which is 80% wt. of the total weight of composite, while the content of thermoplastic polyurethane regranulate was 200 g, which was 20% wt. of the total weight of composite. The mechanical properties of the polyurethane-rubber composite obtained in example 22 are presented in table 1.

### Example 23

In example 23 thermoplastic polyurethane-rubber composite was obtained by using:
- thermoplastic polyurethane, in the form of a granulate with a melt flow index of about 25g / 10 min (200°C; 10 kg), e.g. LARIPUR 9025, the manufacturer Coim (Italy)
- rubber granulate, obtained in the process of grinding of post-consumer rubber products, in particular used tires, with a grains size equal or below 1 mm, e.g. producer Gumeko Sp. z o.o.,

The method for preparation of 1000g polyurethane-rubber thermoplastic composite, according to example 23, included two stages:
In the first stage, rubber granulate in the amount of 500 g, which was 50% wt. (calculated on the total weight of thermoplastic polyurethane-rubber composite) was mixed, by using conventional mechanical mixer, at room temperature with thermoplastic polyurethane granulate used in an amount of 500 g, which was 50% wt., of the total weight of composite. Than the obtained mixture were homogenized by using a co-rotating twinscrew extruder with an L/D equal to 22 and a screw diameter of 20mm, while maintaining the die head temperature and extruder plasticizing zones in the range from 100°C to 250°C and screw rotational speed 50-100 rpm , as a result of which it was obtain a polyurethane-rubber composite in the form of an extrudate, which can be further processed after granulation with a knife granulator onto a homogeneous polyurethane-rubber granulate with a grain size of not more than 5 mm.
In the second stage, the obtained polyurethane-rubber mixtures were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 23 are presented in table 1.

### Example 24

The method for preparation of the 1000 g of the polyurethane-rubber thermoplastic composite according to example 24 was carried out in the same manner, in two stages and using the same materials as described in example 23, except that the content of the rubber granulate in the composition was 800 g, which is 80% wt. of the total weight of composite, while the content of thermoplastic polyurethane regranulate was 200 g, which was 20% wt. of the total weight of composite. The mechanical properties of the polyurethane-rubber composite obtained in example 24 are presented in table 1.

### Example 25

Testing properties of polyurethane-rubber composites, obtained according to examples 1-24.
Polyurethane-rubber composites, obtained according to examples 1-24, have been tested for their tensile strength, elongation at break in accordance with PN-ISO 37: 2007 standard and hardness tests were done for these composites in accordance with PN-EN ISO 868: 2005 standard, and the results are shown in table 1.

**Table 1 The mechanical properties and hardness of polyurethane-rubber composites prepared according to example 1-24, containing from 10% wt. up to 90% wt. of rubber granulate.**

| Type of composite | Composition of the composite [% wt.] | | Tensile strength [MPa] | Elongation at break [%] | Hardness [Sh A] |
|---|---|---|---|---|---|
| | Polyurethane | Rubber granulate (CR) | | | |
| Composite from example 1 | 90 | 10 | 24 | 445 | 87 |
| Composite from example 2 | 50 | 50 | 5.8 | 382 | 81 |
| Composite from example 3 | 20 | 80 | 3.2 | 164 | 68 |
| Composite from example 4 | 10 | 90 | 1.7 | 65 | 60 |
| Composite from example 5 | 50 | 50 | 4.3 | 58 | 82 |
| Composite from example 6 | 20 | 80 | 2.3 | 50 | 67 |
| Composite from example 7 | 50 | 50 | 4.6 | 90 | 77 |
| Composite from example 8 | 20 | 80 | 1.8 | 55 | 64 |
| Composite from example 9 | 50 | 50 | 5.2 | 165 | 78 |
| Composite from example 10 | 20 | 80 | 1.5 | 40 | 64 |
| Composite from example 11 | 50 | 50 | 5.2 | 572 | 70 |
| Composite from example 12 | 10 | 90 | 1.0 | 260 | 57 |
| Composite from example 13 | 50 | 50 | 4.0 | 57 | 78 |
| Composite from example 14 | 30 | 70 | 1.8 | 48 | 65 |
| Composite from example 15 | 50 | 50 | 4.5 | 100 | 80 |
| Composite from example 16 | 30 | 70 | 1.8 | 48 | 66 |
| Composite from example 17 | 50 | 50 | 7.0 | 190 | 77 |
| Composite from example 18 | 30 | 70 | 1.8 | 50 | 70 |
| Composite from example 19 | 30 | 70 | 2.8 | 280 | 67 |
| Composite from example 20 | 90 | 10 | 18.0 | 457 | 84 |
| Composite from example 21 | 50 | 50 | 4.1 | 96 | 77 |
| Composite from example 22 | 20 | 80 | 2.6 | 71 | 67 |
| Composite from example 23 | 50 | 50 | 6.1 | 206 | 78 |
| Composite from example 24 | 20 | 80 | 3.5 | 111 | 68 |

Results presented in the table 1. for thermoplastic polyurethane-rubber composites, obtained according to examples 1-24 indicate that they have a tensile strength in the range of 1-24 MPa, elongation at break in the range of 40-570% and hardness in the range of 57-87 Sh A, with the content of rubber granulate in the range of 10-90% wt. Based on them, it can be concluded that with a increase the amount of rubber granulate in composites their mechanical properties and hardness decrease.
The tests of the melt flow index (MFR) of the composites from examples 1-4, 5, 7 and 9 performed according to the PN-EN ISO 1133-1: 2011 standard prove that for the composites of examples 1-4 the MFR indicator is within the range of 5-27 g / 10min (190oC, 10kg), and for the composites of examples 5; 7; 9 the MFR indicator is in the range of 11-35g / 10min (190°C, 2.16kg). In contrast, abrasion tests made according to PN-ISO 4649: 2007 standard for composites 5; 7; 9 prove that they are characterized by abrasion loss in the range of 15-48 mm3, while the longitudinal elasticity (Young's modulus) of the composites of Examples 1-3 and 20-24 is in the range of 2-30MPa.

### Example 26

In example 26. thermoplastic polyurethane-rubber composite was obtained by using:
- thermoplastic polyurethane, in the form of a granulate with a melt flow index of about 25g / 10 min (200°C; 10 kg), e.g. LARIPUR 9025, the manufacturer Coim (Italy)
- rubber granulate, obtained in the process of grinding of post-consumer rubber products, in particular used tires, with a grains size equal or below 1 mm, e.g. producer Gumeko Sp. z o.o.,
- 1,3-Bis(3-isocyanato-4-methylphenyl)-1,3-diazetidin-2,4-dion, named in document M-IZO, i.e. dimer of Toluene 2,4-diisocyanate (TDI), used in composite as a reactive modifier containing isocyanate groups (M-IZO), contains also 1% wt. pyrogenic silica, which is use to preventing its agglomeration, e.g. producer Kautschuk Group Isochem Ltd, (trade name IsoQure® TT)

The method for preparation of 1000g polyurethane-rubber thermoplastic composite, according to example 26, included two stages:
In the first stage, rubber granulate in the amount of 99 g, which was 9.9% wt. (calculated on the total weight of thermoplastic polyurethane-rubber composite) was mixed, by using conventional mechanical mixer, at room temperature with the reactive modifier in the form of a compound containing isocyanate groups (M-IZO), used in an amount of 10g, which was 1% wt., of the total weight of composite. Then to the mixture of rubber granulate and isocyanate modifier (M-IZO) was added a granulate of thermoplastic polyurethane, used in an amount of 891 g, which was 89.1% wt., of the total weight of composite. In the first stage, a granular unbound polyurethane-rubber powder mixture with reactive modifier is obtained This mixture cannot be formed into composite products without the use of injection molding or extrusion processes, in which the polyurethane matrix melts into a plastic-liquid state and the reactive modifier is activated by high temperature (above 130°C). Then in a high temperature (temperature of processing) this plastic mass and modifier bond the rubber grains, in the plasticizing zones of the extruders or injection molding machines, and after molding (in injection molding process or in the extruder die-head) and after cool it down to ambient temperature this plastic mass is formed to useful solid products.
In the second stage, the obtained polyurethane-rubber mixtures were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 26 are presented in table 2.

### Example 27

The method for preparation of the 1000 g of the polyurethane-rubber thermoplastic composite according to example 27 was carried out in the same manner, in two stages and using the same materials as described in example 26, except that the content of the rubber granulate in the composition was 495 g, which was 49.5% wt. of the total weight of composite, while the content of thermoplastic polyurethane was 495 g, which was 49.5% wt. of the total weight of composite and the content of isocyanate modifier (M-IZO) was 10g, which was 1% wt. of the total weight of composite. The mechanical properties of the polyurethane-rubber composite obtained in example 27 are presented in table 2.

### Example 28

The method for preparation of the 1000 g of the polyurethane-rubber thermoplastic composite according to example 28 was carried out in the same manner, in two stages and using the same materials as described in example 26, except that the content of the rubber granulate in the composition was 792 g, which was 79.2% wt. of the total weight of composite, while the content of thermoplastic polyurethane was 198 g, which was 19.8% wt. of the total weight of composite and the content of isocyanate modifier (M-IZO) was 10g, which was 1% wt. of the total weight of composite. The mechanical properties of the polyurethane-rubber composite obtained in example 28 are presented in table 2.

### Example 29

The method for preparation of the 1000 g of the polyurethane-rubber thermoplastic composite according to example 29 was carried out in the same manner, in two stages and using the same materials as described in example 26, except that the content of the rubber granulate in the composition was 95 g, which was 9.5% wt. of the total weight of composite, while the content of thermoplastic polyurethane was 855 g, which was 85.5% wt. of the total weight of composite and the content of isocyanate modifier (M-IZO) was 50g, which was 5% wt. of the total weight of composite. The mechanical properties of the polyurethane-rubber composite obtained in example 29 are presented in table 2.

### Example 30

The method for preparation of the 1000 g of the polyurethane-rubber thermoplastic composite according to example 30 was carried out in the same manner, in two stages and using the same materials as described in example 26, except that the content of the rubber granulate in the composition was 475 g, which was 47.5% wt. of the total weight of composite, while the content of thermoplastic polyurethane was 475 g, which was 47.5% wt. of the total weight of composite and the content of isocyanate modifier (M-IZO) was 50 g, which was 5% wt. of the total weight of composite. The mechanical properties of the polyurethane-rubber composite obtained in example 30 are presented in table 2.

### Example 31

The method for preparation of the 1000 g of the polyurethane-rubber thermoplastic composite according to example 31 was carried out in the same manner, in two stages and using the same materials as described in example 26, except that the content of the rubber granulate in the composition was 760 g, which was 76% wt. of the total weight of composite, while the content of thermoplastic polyurethane was 190 g, which was 19% wt. of the total weight of composite and the content of isocyanate modifier (M-IZO) was 50g, which was 5% wt. of the total weight of composite. The mechanical properties of the polyurethane-rubber composite obtained in example 31 are presented in table 2.

### Example 32

Testing properties of polyurethane-rubber composites, obtained according to examples 26-31.
Polyurethane-rubber composites, obtained according to examples 26-31, containing from 1% to 5% wt. of the isocyanate modifier (M-IZO), have been tested for their tensile strength, elongation at break, and for their longitudinal elasticity (Young's modulus) in accordance with PN-ISO 37: 2007 standard, the hardness tests were done for these composites in accordance with PN-EN ISO 868: 2005 standard, and the results are shown in table 2.

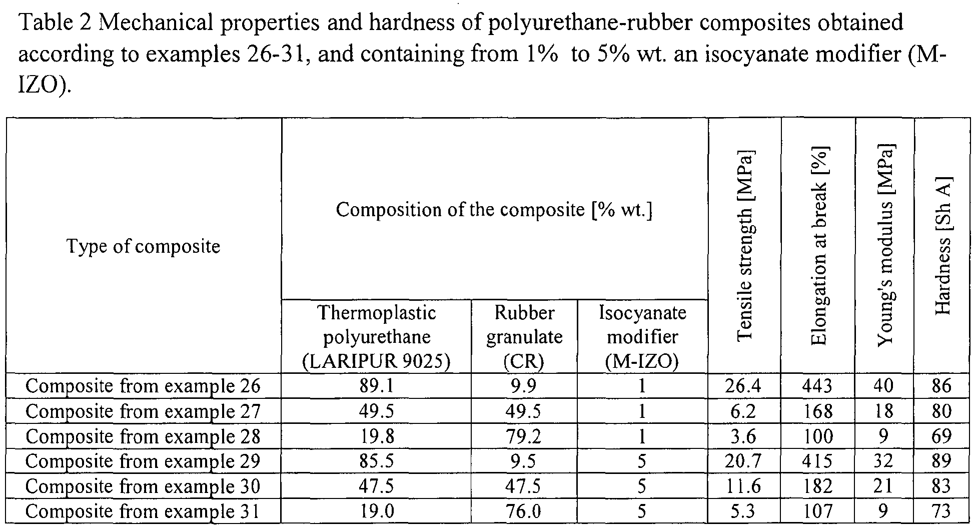

The results of mechanical tests of the thermoplastic polyurethane-rubber composites presented in Table 2, obtained according to examples 26-31, indicate that they have a higher tensile strength and a higher modulus of elasticity, compared to composites that do not contain the isocyanate modifier (M-IZO), from examples 1-3 (Table 1). This is particularly evident for the composites of Examples 29-31 which containing 5% wt. of the modifier M-IZO. However, no significant effect of the presence and amount of the isocyanate modifier on the hardness of the composites was-noted, as compared to the composites of Examples 1-3 (Table1). Beside this the obtained results shown also that, the addition of an isocyanate modifier to these composites, caused the decreasing their elongation at break.,

### Example 33

In example 33. thermoplastic polyurethane-rubber composite was obtained by using:
- thermoplastic polyurethane, in the form of a granulate with a melt flow index of about 25 g/10 min (200°C; 10 kg), e.g. LARIPUR 9025, the manufacturer Coim (Italy)
- rubber granulate, obtained in the process of grinding of post-consumer rubber products, in particular used tires, with a grains size equal or below 1 mm, e.g. producer Gumeko Sp. z o.o.,
- solid epoxy adhesive, heat curing at a temperature above 120°C, with an epoxide number in range 0.19-0.23 mol/100 g, used in composite as a reactive modifier containing epoxy groups (M-EPOXY), e.g. producer CIECH Sarzyna SA, (trade name Epidian 100)

The method for preparation of 1000g polyurethane-rubber thermoplastic composite, according to example 33, included two stages:
In the first stage, rubber granulate in the amount of 99 g, which was 9.9% wt. (calculated on the total weight of thermoplastic polyurethane-rubber composite) was mixed, by using conventional mechanical mixer, at room temperature with the solid reactive modifier in the form of a compound containing epoxy groups (M-EPOXY), used in an amount of 10 g, which was 1% wt., of the total weight of composite. Then to the mixture of rubber granulate and epoxy modifier (M-IZO) was added a granulate of thermoplastic polyurethane, used in an amount of 891 g, which was 89.1% wt., of the total weight of composite. In the first stage, a granular unbound polyurethane-rubber powder mixture with reactive modifier is obtained This mixture cannot be formed into composite products without the use of injection molding or extrusion processes, in which the polyurethane matrix melts into a plastic-liquid state and the reactive modifier is activated by high temperature (above 120°C). Then in a high temperature (temperature of processing) this plastic mass and modifier bond the rubber grains, in the plasticizing zones of the extruders or injection molding machines, and after molding (in injection molding process or in the extruder die-head) and after cool it down to ambient temperature this plastic mass is formed to useful solid products.
In the second stage, the obtained polyurethane-rubber mixtures with reactive epoxy modifier were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 33 are presented in table 3.

### Example 34

The method for preparation of the 1000 g of the polyurethane-rubber thermoplastic composite according to example 34 was carried out in the same manner, in two stages and using the same materials as described in example 33, except that the content of the rubber granulate in the composition was 495 g, which was 49.5% wt. of the total weight of composite, while the content of thermoplastic polyurethane was 495 g, which was 49.5% wt. of the total weight of composite and the content of epoxy modifier (M-EPOXY) was 10g, which was 1% wt. of the total weight of composite. The mechanical properties of the polyurethane-rubber composite obtained in example 34 are presented in table 3.

### Example 35

The method for preparation of the 1000 g of the polyurethane-rubber thermoplastic composite according to example 35 was carried out in the same manner, in two stages and using the same materials as described in example 33, except that the content of the rubber granulate in the composition was 792 g, which was 79.2% wt. of the total weight of composite, while the content of thermoplastic polyurethane was 198 g, which was 19.8% wt. of the total weight of composite and the content of epoxy modifier (M-EPOXY) was 10 g, which was 1% wt. of the total weight of composite. The mechanical properties of the polyurethane-rubber composite obtained in example 35 are presented in table 3.

### Example 36

The method for preparation of the 1000 g of the polyurethane-rubber thermoplastic composite according to example 36 was carried out in the same manner, in two stages and using the same materials as described in example 33, except that the content of the rubber granulate in the composition was 95 g, which was 9.5% wt. of the total weight of composite, while the content of thermoplastic polyurethane was 855 g, which was 85.5% wt. of the total weight of composite and the content of epoxy modifier (M-EPOXY) was 50g, which was 5% wt. of the total weight of composite. The mechanical properties of the polyurethane-rubber composite obtained in example 36 are presented in table 3.

### Example 37

The method for preparation of the 1000 g of the polyurethane-rubber thermoplastic composite according to example 37 was carried out in the same manner, in two stages and using the same materials as described in example 33, except that the content of the rubber granulate in the composition was 475 g, which was 47.5% wt. of the total weight of composite, while the content of thermoplastic polyurethane was 475 g, which was 47.5% wt. of the total weight of composite and the content of epoxy modifier (M-EPOXY) was 50 g, which was 5% wt. of the total weight of composite. The mechanical properties of the polyurethane-rubber composite obtained in example 37 are presented in table 3.

### Example 38

The method for preparation of the 1000 g of the polyurethane-rubber thermoplastic composite according to example 38 was carried out in the same manner, in two stages and using the same materials as described in example 33, except that the content of the rubber granulate in the composition was 760 g, which was 76% wt. of the total weight of composite, while the content of thermoplastic polyurethane was 190 g, which was 19% wt. of the total weight of composite and the content of epoxy modifier (M-EPOXY) was 50 g, which was 5% wt. of the total weight of composite. The mechanical properties of the polyurethane-rubber composite obtained in example 38 are presented in table 3.

### Example 39

Testing properties of polyurethane-rubber composites, obtained according to examples 33-38.
Polyurethane-rubber composites, obtained according to examples 33-38, containing from 1% to 5% wt. of the epoxy modifier (M-EPOXY), have been tested for their tensile strength, elongation at break, and for their longitudinal elasticity (Young's modulus) in accordance with PN-ISO 37: 2007 standard, the hardness tests were done for these composites in accordance with PN-EN ISO 868: 2005 standard, and the results are presented in the table 3.

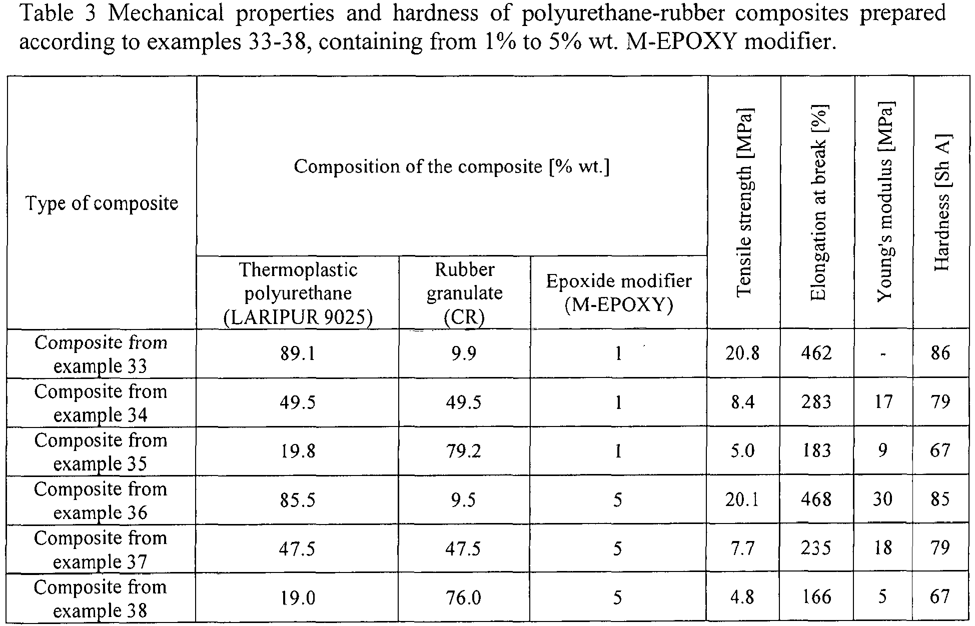

The results of mechanical tests of the thermoplastic polyurethane-rubber composites presented in Table 3, obtained according to examples 33-38, indicate that they have a higher tensile strength, compared to composites that do not contain the epoxy modifier (M-EPOXY), from examples 1-3 (Table 1) and the exception is only composites containing no more than 10% wt. of rubber granulate and 1% wt. of M-EPOXY. This is particularly evident for the composites from Examples 36-38 which contains 5% wt. of the modifier M-IZO and more than 47% wt. of rubber granulate. However, no significant effect of the presence and amount of the epoxy modifier on the hardness and elongation at break of the composites was noted, as compared to the composites from Examples 1-3 (Table1). Beside this the obtained results shown also that, the addition of an isocyanate modifier to these composites, caused in some cases the increasing of their Young's modulus.

### Example 40

To prepare thermoplastic polyurethane-rubber composite in the example 40, following materials were used
- cast polyurethane elastomer (LEU) with thermoplastic properties, in the form of granulate with grains size equal or below 10 mm, synthesized at a molar ratio of NCO/OH groups of 0.95/1, by using: α,ω-dihydroxy[oligo(ethylene-butylene adipate)] (e.g. Polios 55/20, producer Purinova), with a molecular weight of 2000 g/mol, 4,4'-diphenylmethane diisocyanate (e.g., Ongronat 3800, produced by BorsodChem) with a molecular weight of 250 g/mol and 1,4 butanediol (eg producer Brenntag Polska Sp. z o.o.) with a molecular weight of 90.12 g/mol, the amount of the oligoester diol (eg Polios55/20) in the cast urethane elastomer was 56.1% wt. and the diisocyanate content (e.g. Ongronat 3800) was 33.8% wt., while the content of 1,4-butanediol was 10.1% wt.
- rubber granulate, obtained in the process of grinding of post-consumer rubber products, in particular used tires, with a grains size equal or below 1 mm, e.g. producer Gumeko Sp. z o.o.,
- 1,3-Bis(3-isocyanato-4-methylphenyl)-1,3-diazetidin-2,4-dion, named in document M-IZO, i.e. dimer of Toluene 2,4-diisocyanate (TDI), used in composite as a reactive modifier containing isocyanate groups (M-IZO), contains also 1% wt. pyrogenic silica, which is use to preventing its agglomeration, e.g. producer Kautschuk Group Isochem Ltd, (trade name IsoQure® TT)

The method for preparation of 1000g polyurethane-rubber thermoplastic composite, according to example 40, included two stages:
In the first stage, rubber granulate in the amount of 495 g, which was 49.5% wt. (calculated on the total weight of thermoplastic polyurethane-rubber composite) was mixed, by using conventional mechanical mixer, at room temperature with the reactive modifier in the form of a compound containing isocyanate groups (M-IZO), used in an amount of 10g, which was 1% wt., of the total weight of composite. Next, to the mixture of rubber granulate and isocyanate modifier (M-IZO) was added a granulate of cast polyurethane elastomer (LEU), used in an amount of 495 g, which was 49.5% wt., of the total weight of composite.
In the second stage, the obtained polyurethane-rubber mixtures were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 26 are presented in table 4.

### Example 41

The method for preparation of the 1000 g of the polyurethane-rubber thermoplastic composite according to example 41 was carried out in the same manner, in two stages and using the same proportions of components in the composite as described in example 40, except that a granulate of cast polyurethane elastomer (LEU) which was used to obtain the composite was synthesized with a molar ratio of NCO/OH groups of 1.0/1, and the content of the oligoester diol in the cast polyurethane elastomer (eg Polios55 / 20) was 56.4% wt., the diisocyanate content (e.g., Ongronat 3800) was 33,9% wt., while the content of 1,4-butanediol was 9.7% wt. The mechanical properties of the polyurethane-rubber composite obtained in example 41 are presented in table 4.

### Example 42

The method for preparation of the 1000 g of the polyurethane-rubber thermoplastic composite according to example 42 was carried out in the same manner, in two stages and using the same proportions of components in the composite as described in example 40, except that a granulate of cast polyurethane elastomer (LEU) which was used to obtain the composite was synthesized with a molar ratio of NCO/OH groups of 1.1/1, and the content of the oligoester diol in the cast polyurethane elastomer (eg Polios55/20) was 56.9% wt., the diisocyanate content (e.g., Ongronat 3800) was 34,2% wt., while the content of 1,4-butanediol was 8.9% wt. The mechanical properties of the polyurethane-rubber composite obtained in example 42 are presented in table 4.

### Example 43

Testing properties of polyurethane-rubber composites, obtained according to examples 40-42.
Polyurethane-rubber composites, obtained according to examples 40-42, have been tested for their tensile strength, elongation at break in accordance with PN-ISO 37: 2007 standard, for hardness in accordance with PN-EN ISO 868: 2005 standard, and the abrasion resistance tests were done for these composites in accordance with PN-ISO 4649: 2007 standard and the results of these tests are shown in table 4.

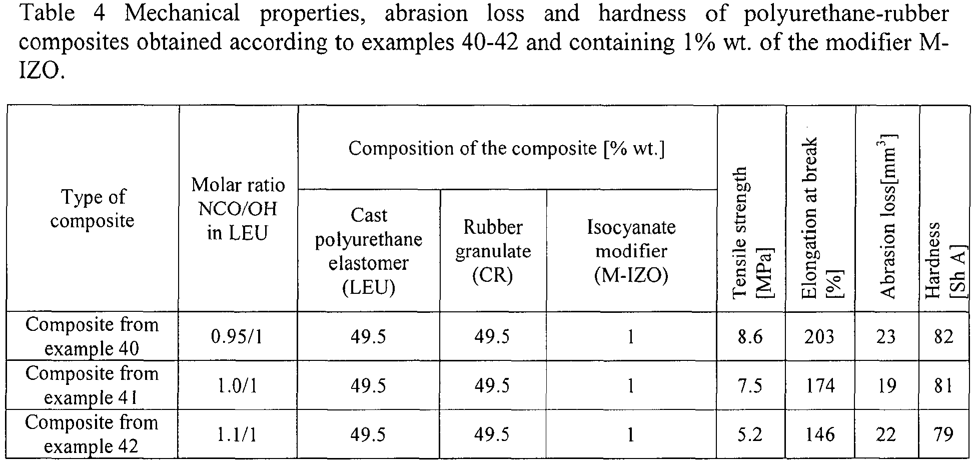

The results presented in Table 4, for the thermoplastic polyurethane-rubber composites obtained according to examples 40-42, indicate that, the materials in which the polyurethane matrix (LEU) was synthesized at a molar ratio NCO/OH not more than 1.0/1 are characterized by higher tensile strength and elongation at break and greater abrasion resistance, compared to composites of this type, which were obtained according to examples 5; 7 and 9 without the addition of an isocyanate modifier (M-IZO). This is particularly evident for the composite obtained according to example 40.

### Example 44

In example 44. thermoplastic polyurethane-rubber composite was obtained by using:
- thermoplastic polyurethane regranulate, with hardness 75 Sh A, obtained in the grinding proces of post-consumer cable insulation, with grains size in the range 6-8 mm, and with a melt flow index over 2 g/10min (200°C, 2.16kg), e.g. producer SIGLO (Poland) .
- rubber granulate, obtained in the process of grinding of post-consumer rubber products, in particular used tires, with a grains size equal or below 1 mm, e.g. producer Gumeko Sp. z o.o.,
- 1,3-Bis(3-isocyanato-4-methylphenyl)-1,3-diazetidin-2,4-dion, named in document M-IZO, i.e. dimer of Toluene 2,4-diisocyanate (TDI), used in composite as a reactive modifier containing isocyanate groups (M-IZO), contains also 1% wt. pyrogenic silica, which is use to preventing its agglomeration, e.g. producer Kautschuk Group Isochem Ltd, (trade name IsoQure® TT)

The method for preparation of 1000 g polyurethane-rubber thermoplastic composite, according to example 44, included two stages:
In the first stage, rubber granulate in the amount of 99 g, which was 9.9% wt. (calculated on the total weight of thermoplastic polyurethane-rubber composite) was mixed, by using conventional mechanical mixer, at room temperature with the reactive modifier in the form of a compound containing isocyanate groups (M-IZO), used in an amount of 10 g, which was 1% wt., of the total weight of composite. Next, to the mixture of rubber granulate and isocyanate modifier (M-IZO) was added a regranulate of thermoplastic polyurethane, used in an amount of 891 g, which was 89.1% wt., of the total weight of composite and the obtained mixture was thoroughly mixed again, using a mechanical mixer.
In the second stage, the obtained polyurethane-rubber mixtures with isocyanate modifier were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 44 are presented in table 5.

### Example 45

The method for preparation of the 1000 g of the polyurethane-rubber thermoplastic composite modified with a reactive isocyanate modifier according to example 45 was carried out in the same manner, in two stages and using the same materials as described in example 44, except that the content of the rubber granulate in the composition was 495 g, which was 49.5% wt. of the total weight of composite, while the content of thermoplastic polyurethane regranulate was 495 g, which was 49.5% wt. of the total weight of composite and the content of isocyanate modifier (M-IZO) was 10g, which was 1% wt. of the total weight of composite. The mechanical properties of the polyurethane-rubber composite obtained in example 45 are presented in table 5.

### Example 46

The method for preparation of the 1000 g of the polyurethane-rubber thermoplastic composite modified with a reactive isocyanate modifier according to example 46 was carried out in the same manner, in two stages and using the same materials as described in example 44, except that the content of the rubber granulate in the composition was 792 g, which was 79.2% wt. of the total weight of composite, while the content of thermoplastic polyurethane regranulate was 198 g, which was 19.8% wt. of the total weight of composite and the content of isocyanate modifier (M-IZO) was 10g, which was 1% wt. of the total weight of composite. The mechanical properties of the polyurethane-rubber composite obtained in example 46 are presented in table 5.

### Example 47

Thermoplastic polyurethane-rubber composites, obtained according to examples 44-46, modified with 1%wt. of the isocyanate modifier (M-IZO), have been tested for their tensile strength, elongation at break, and for their longitudinal elasticity (Young's modulus) in accordance with PN-ISO 37: 2007 standard, the hardness tests were done for these composites in accordance with PN-EN ISO 868: 2005 standard, and the results are shown in table 5.

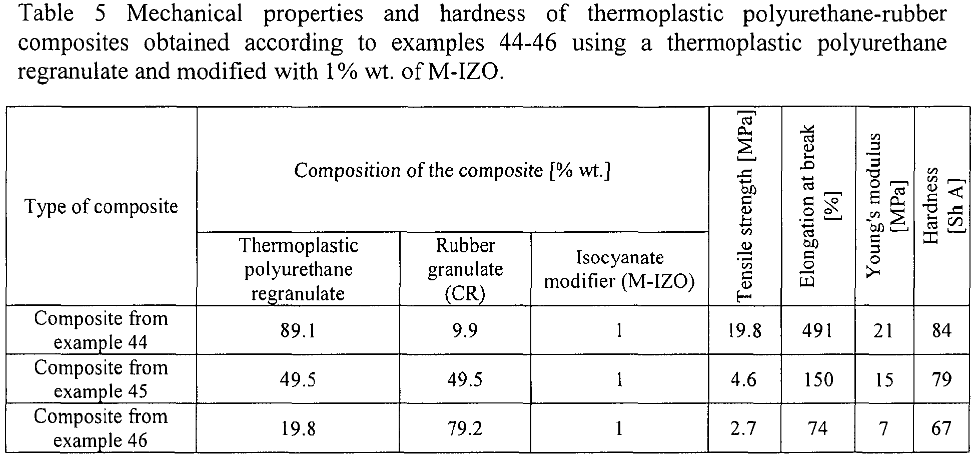

The results presented in Table 5, for the thermoplastic polyurethane-rubber composites obtained according to examples 44-46, indicate that, they have higher tensile strength and higher elongation at break, comparable hardness and slightly lower modulus of elasticity, compared to the composites from Examples 20-22, which were obtained using the same rubber granulate and regranulate of thermoplastic polyurethane, but without the addition of an isocyanate modifier (M-IZO).

### Example 48

In example 48 thermoplastic polyurethane-rubber composite was obtained by using:
- thermoplastic polyurethane regranulate, with hardness 75 Sh A, obtained in the grinding proces of post-consumer cable insulation, with grains size in the range 6-8 mm, and with a melt flow index over 2 g/10 min (200°C, 2.16kg), e.g. producer SIGLO (Poland).
- rubber granulate, obtained in the process of grinding of post-consumer rubber products, in particular used tires, with a grains size equal or below 1 mm, e.g. producer Gumeko Sp. z o.o.,
- solid epoxy adhesive, heat curing at temperature above 120°C, with an epoxide number in range 0.19-0.23 mol/100 g, used in composite as a reactive modifier containing epoxy groups (M-EPOXY), e.g. producer CIECH Sarzyna SA, (trade name Epidian 100)

The method for preparation of 1000 g polyurethane-rubber thermoplastic composite, according to example 48, included two stages:
In the first stage, rubber granulate in the amount of 99 g, which was 9.9% wt. (calculated on the total weight of thermoplastic polyurethane-rubber composite) was mixed, by using conventional mechanical mixer, at room temperature with the reactive modifier in the form of a compound containing epoxy groups (M-EPOXY), used in an amount of 10g, which was 1% wt., of the total weight of composite. Next, to the mixture of rubber granulate and isocyanate modifier (M-IZO) was added a regranulate of thermoplastic polyurethane, used in an amount of 891 g, which was 89.1% wt., of the total weight of composite and the obtained mixture was thoroughly mixed again, using a mechanical mixer.
In the second stage, the obtained polyurethane-rubber mixtures with epoxy modifier were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 48 are presented in table 6.

### Example 49

The method for preparation of the 1000 g of the polyurethane-rubber thermoplastic composite modified with a reactive epoxy modifier according to example 49 was carried out in the same manner, in two stages and using the same materials as described in example 48, except that the content of the rubber granulate in the composition was 495 g, which was 49.5% wt. of the total weight of composite, while the content of thermoplastic polyurethane regranulate was 495 g, which was 49.5% wt. of the total weight of composite and the content of epoxy modifier (M-EPOXY) was 10g, which was 1% wt. of the total weight of composite. The mechanical properties of the polyurethane-rubber composite obtained in example 49 are presented in table 6.

### Example 50

The method for preparation of the 1000 g of the polyurethane-rubber thermoplastic composite modified with a reactive isocyanate modifier according to example 50 was carried out in the same manner, in two stages and using the same materials as described in example 48, except that the content of the rubber granulate in the composition was 792 g, which was 79.2% wt. of the total weight of composite, while the content of thermoplastic polyurethane regranulate was 198 g, which was 19.8% wt. of the total weight of composite and the content of epoxy modifier (M-EPOXY) was 10g, which was 1% wt. of the total weight of composite. The mechanical properties of the polyurethane-rubber composite obtained in example 50 are presented in table 6.

### Example 51

Thermoplastic polyurethane-rubber composites, obtained according to examples 48-50, modified with 1%wt. of the epoxy modifier (M-EPOXY), have been tested for their tensile strength, elongation at break, and for their longitudinal elasticity (Young's modulus) in accordance with PN-ISO 37: 2007 standard, the hardness tests were done for these composites in accordance with PN-EN ISO 868: 2005 standard, and the results are shown in table 6.

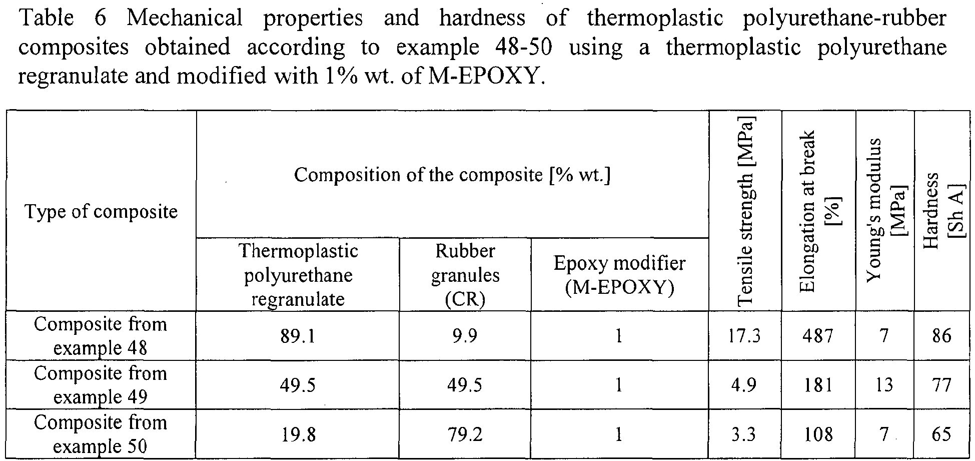

The results presented in Table 6, for the thermoplastic polyurethane-rubber composites obtained according to examples 48-50, indicate that, they have comparable tensile strength, but much higher elongation at break, compared to the composites from Examples 20-22, which were obtained using the same amounts of rubber granulate and regranulate of thermoplastic polyurethane, but without the addition of epoxy modifier (M-EPOXY). In compare to the composites obtained according to examples 20-22, in this case there was no significant effect of the presence of the epoxy modifier on the hardness of these composites, while the addition of an epoxy modifier caused a reduction of elastic modulus in these composite materials.

### Example 52

In example 52 thermoplastic polyurethane-rubber composite was obtained by using:
- thermoplastic polyurethane, in the form of a granulate with a melt flow index of about 25 g / 10 min (200°C; 10 kg), e.g. LARIPUR 9025, the manufacturer Coim (Italy)
- rubber granulate, obtained in the process of grinding of post-consumer rubber products, in particular used tires, with a grains size equal or below 1 mm, e.g. producer Gumeko Sp. z o.o.,
- 1,3-Bis(3-isocyanato-4-methylphenyl)-1,3-diazetidin-2,4-dion, named in document M-IZO, i.e. dimer of Toluene 2,4-diisocyanate (TDI), used in composite as a reactive modifier containing isocyanate groups (M-IZO), contains also 1% wt. pyrogenic silica, which is use to preventing its agglomeration, e.g. producer Kautschuk Group Isochem Ltd, (trade name IsoQure® TT)

The method for preparation of 1000 g polyurethane-rubber thermoplastic composite, according to example 52, included three stages:
In the first stage, rubber granulate in the amount of 495 g, which was 49.5% wt. (calculated on the total weight of thermoplastic polyurethane-rubber composite) was mixed, by using conventional mechanical mixer, at room temperature with thermoplastic polyurethane granulate used in an amount of 495 g, which was 49.5% wt., of the total weight of composite. Then the obtained mixture were homogenized by using a co-rotating twinscrew extruder with an L/D equal to 22 and a screw diameter of 20mm, while maintaining the die head temperature and extruder plasticizing zones in the range from 100°C to 250°C and screw rotational speed in range 50-100 rpm , as a result of which it was obtain a polyurethane-rubber composite in the form of an extrudate, which was grinded with a knife granulator into a homogeneous polyurethane-rubber granulate with a grain size of not more than 5 mm.
In the second stage, the polyurethane-rubber granulate obtained in the first stage was mixed using a mechanical mixer with a reactive modifier containing isocyanate groups (M-IZO), used in an amount of 10 g, which was 1% wt. of the total weight of composite.
In the third stage, the obtained polyurethane-rubber mixtures were injection molded by using an injection molding machine, e.g. Battenfeld HM 45/130 B6E, in this process were prepared the injection molded dumbbell specimens with dimensions compliant with PN-ISO 37:2007 standard, with the temperature of plasticizing zones and the nozzle was in the range of 180-250°C. The mechanical properties of the polyurethane-rubber composite obtained in example 52 are presented in table 7.

### Example 53

The method for preparation of the 1000 g of the polyurethane-rubber thermoplastic composite according to example 53 was carried out in the same manner, in three stages and using the same materials as described in example 52, except that the content of the rubber granulate in the composition was 792 g, which was 79.2% wt. of the total weight of composite, while the content of thermoplastic polyurethane was 198 g, which was 19.8% wt. of the total weight of composite and the content of isocyanate modifier (M-IZO) was 10g, which was 1% wt. of the total weight of composite. The mechanical properties of the polyurethane-rubber composite obtained in example 53 are presented in table 7.

### Example 54

Thermoplastic polyurethane-rubber composites, obtained according to examples 52-53, modified with 1% wt. of the isocyanate modifier (M-IZO), have been tested for their tensile strength, elongation at break and longitudinal elasticity (Young's modulus) in accordance with PN-ISO 37: 2007 standard, and the results of these tests are shown in table 7.

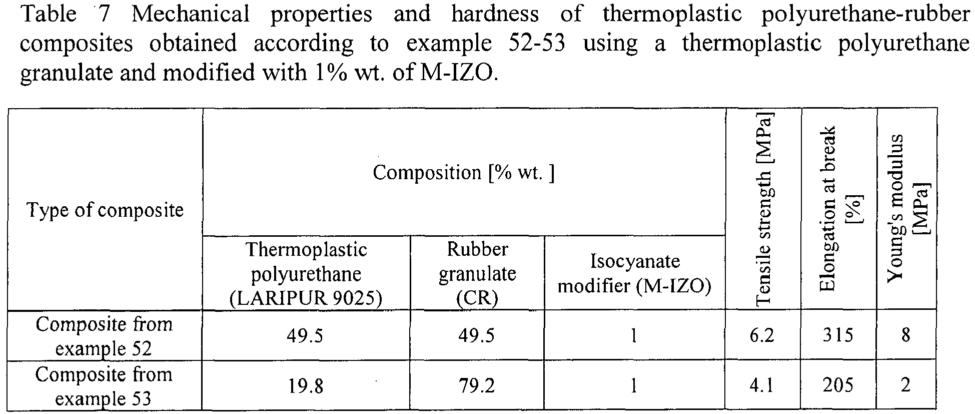

The results presented in Table 7, for the thermoplastic polyurethane-rubber composites obtained according to examples 52-53, indicate that, they have a slightly higher tensile strength and lower modulus of elasticity, compared to composites which were obtained according to examples 23-24 using with the same amount of rubber granulate and granulate of thermoplastic polyurethane, but without the addition of isocyanate modifier (M-IZO).

Beside this, it can be concluded that the use of the three-step method in the process of obtaining composites and an addition of 1% wt. of the M-IZO modifier allow to increase a elongation at break of polyurethane-rubber composites, in compared to composites without modifier (examples 23-24).

## Claims

1. Thermoplastic polyurethane-rubber composite, **characterized in that** the composite comprises, calculated on the weight of composite, from 19% to 90% wt. thermoplastic polyurethane or thermoplastic cast urethane elastomer and from 9.5 to 80% wt. rubber granulate, and also from 1 to 5% wt. reactive modifiers having in its structure reactive isocyanate or epoxide groups, which are activated at elevated temperature under the conditions of the further processing in a way of injection molding and/or extrusion of the composite.

2. The composite according to claim 1, wherein as a rubber granulate, the composite comprises grinded rubber waste obtained from the recycling process of tires.

3. The composite according to claim 1, wherein the composite comprises waste rubber particles, in the form of rubber granulate, with the grain size equal or below 1mm.

4. The composite according to claim 1, wherein the composite comprises thermoplastic polyurethane or thermoplastic cast urethane elastomer susceptible to further processing by extrusion in the temperature range 100-250°C and/or thermoplastic polyurethane or thermoplastic cast urethane elastomer susceptible to injection molding process, in a temperature range of 180-250°C.

5. The composite according to claim 1, wherein the composite comprises isocyanate modifier in the form of 1,3-Bis(3-isocyanato-4-methylphenyl)-1,3-diazetidin-2,4-dion.

6. The composite according to claim 1, wherein, the composite comprises epoxy modifier in the form of solid epoxy resin with a softening point not lower than 75°C.

7. The composite according to claim 1, wherein the composite comprises isocyanate and/or epoxy modifier in the form of powder with a grain size of no more than 1 mm.

8. The composite according to claim 1, wherein the composite comprises thermoplastic polyurethane **characterized by** mass melt flow index above 2 g/10 min measured at 180°C under a load of 2.16 kg.

9. The composite according to claim 1 or 4 or 8, wherein the composite comprises thermoplastic polyurethane **characterized by** processing temperature of injection molding of the thermoplastic polyurethane above 150°C while processing temperature of extrusion above 100°C.

10. The composite according to claim 1 or 4 or 8 or 9, wherein the composite comprises thermoplastic polyurethane in the form of granules with a grain size of not more than 5 mm.

11. The composite according to claim 1 or 4 or 8 or 9 or 10, wherein the composite comprises thermoplastic polyurethane granulate obtained by the grinding of post-consumer elastomeric, polyurethane products.

12. The composite according to claim 1 wherein the composite comprises cast urethane elastomer with thermoplastic properties synthesized at a final molar ratio of NCO/OH groups in the range from 0.95/1 to 1.2/1.

13. The composite according to claim 1 or 12 wherein cast elastomer has a melt flow index above 2 g/10 min measured under a load of 2.16 kg at a temperature of 200°C.

14. Thermoplastic polyurethane-rubber composite, **characterized in that** the composite comprises, calculated on the total weight of composite, from 10% wt. to 90% wt. of thermoplastic polyurethane or cast polyurethane elastomer and from 10% wt. to 90% wt. of rubber granulate.

15. The composite according to claim 14, wherein as a rubber granulate, the composite comprises grinded rubber waste obtained from the recycling process of used tires.

16. The composite according to claim 14, wherein as rubber granulate the composite comprises waste rubber particles in the form of rubber granulate, with the grain size equal or below 1mm.

17. The composite according to claim 14, wherein the composite comprises thermoplastic polyurethane granulate obtained as a result of the grinding of post-consumer elastomeric, polyurethane products.

18. The composite according to claim 14 or 17, wherein the composite comprises thermoplastic polyurethane in the form of a granulate with a grain size of not more than 10 mm.

19. The composite according to claim 14 or 17 or 18, wherein the composite comprises polyether urethane as thermoplastic polyurethane.

20. The composite according to claim 14 or 17 or 18 or 19, wherein as thermoplastic polyurethane the composite comprises thermoplastic polyurethane and/or a thermoplastic cast urethane elastomer susceptible to processing by extrusion in the temperature range 100-250°C and/or thermoplastic polyurethane and/or thermoplastic cast urethane elastomer susceptible to processing by injection molding, in the temperature range 180-250°C.

21. The composite according to claim 14, wherein the composite comprises cast urethane elastomer with thermoplastic properties having a final molar ratio of NCO/OH groups in the range from 0.95/1 to 1.2/1.

22. The composite according to claim 14 or 21, wherein cast elastomer has a melt flow index above 2 g/10 min measured under a load of 2.16 kg at temperature of 200°C.

23. The composite according to claim 14 or 21 or 22, wherein the composite comprises cast elastomer obtained from α,ω-dihydroxy[oligo(ethylene-butylene adipate)] (OABE) and from 4,4'-diphenylmethane diisocyanate (MDI) and 1,4-butanediol (BDO), wherein the oligoester diol (OABE) content in the cast elastomer is in the range from 56.1 to 56.9% wt., and the content of diisocyanate (MDI) in the cast elastomer is in the range from 33.8% wt. to 34.2% wt., while the content of 1,4-butanediol (BDO) in the cast elastomer is in the range from 8.9% wt. to 10.1% wt.

24. Method for preparation of thermoplastic polyurethane-rubber composite, characterized the that the method is carried out in two stages:
- in a first step, a mixture of a rubber granulate with a thermoplastic polyurethane or a cast thermoplastic elastomer with thermoplastic properties is being obtained, in which grinded rubber waste is mixed with thermoplastic polyurethane or cast urethane elastomer granules, wherein the amount of rubber granulate, calculated on the total weight of the composite, is from 10% wt. to 90% wt. of mentioned components, and the amount of thermoplastic polyurethane or cast urethane elastomer, calculated on the total weight of composite is from 10% wt. to 90% wt. of mentioned components,
- in the second stage, the obtained mixture is being subject to further processing by injection molding or extrusion.

25. The method according to claim 24, wherein particulate rubber waste with a size of grains equal or above 1 mm and granulates of thermoplastic polyurethane with a grain size equal or above 10 mm or cast urethane elastomer with a grain size equal or above 10 mm is used.

26. The method according to claim 24, wherein in the first step in the case of using cast urethane elastomer, a mixture of a low molecular weight glycol and rubber granulate is being obtained, which is mixed until the rubber grains are completely covered with glycol, while the amount of rubber granulate, calculated on the total weight of the composite, is from 50% wt. to 70% wt. of mentioned substrates, while the amount of glycol, calculated on the weight of composite, is from 2.7 to 5.1% wt., and then urethane prepolymer is added to the mixing mixture in the amount, calculated on the total weight of the composite, from 27.3% wt. to 45.6% wt. and in the second step, the obtained urethane-rubber mixture after curing at 80-100°C is being grinded into a granulate with a grain size of not more than 10 mm and is being subjected to further processing by injection molding, the temperature of the injection molding processing being in the range 180-250°C, or is being subject to further processing by extrusion at temperature in the range from 100 to 250°C.

27. The method according to claim 24, wherein in the first step in the case of using urethane elastomer, the urethane prepolymer is mixed with low molecular weight glycol and then with a rubber granulate, and the obtained mixture after hardening at 80-100°C is being grinded for granules with a grain size of no more than 10 mm and is being subject to further processing by injection molded, the temperature of the injection molding processing is in the range 180-250°C, or is being subject to further processing by extrusion while maintaining the temperature in the range from 100 to 250°C, wherein the amount of rubber waste, calculated on the weight of the composite, is 70% wt., while the amount of urethane prepolymer, calculated on the total weight of the composite, is 27.5% wt. and the amount of 1,4-butanediol is 2.5% wt. of mentioned substrates.

28. The method according to claim 24, wherein in in the first step the case of using a thermoplastic polyurethane, a mixture of a rubber granulate with a thermoplastic polyurethane is being obtained, wherein the amount of rubber waste, calculated on the weight of the composite, is from 50% wt. to 80% wt. of mentioned substrates, whereas the amount of thermoplastic polyurethane, calculated on the weight of the composite eis from 20% wt. to 50% wt. of mentioned substrates, and after that the substrates are being homogenized using an extruder, resulting in a polyurethane-rubber extrudate being obtained, which is then being granulated into homogeneous polyurethane-rubber granulate with a grain size no more than 10 mm.

29. The method according to claim 26 or 27, wherein 1,4-butanediol is used as low molecular weight glycol.

30. The method according to claim 26 or 27, wherein the urethane prepolymer is being heated up to a maximum temperature of 60°C.

31. The method according to claim 26 or 27, wherein the urethane prepolymer comprises more than 8% wt. of unreacted NCO groups.

32. The method according to claim 26 or 27, wherein the urethane prepolymer is synthesized from an aromatic diisocyanate used in an amount of 32.3% wt. to 37.6% wt. and an oligodiol used in the amount from 62.4% wt. to 67,7%.wt. based on the mass of prepolymer.

33. The method according to claim 26 or 27, wherein oligodiol with a molecular weight of 2000 g/mol is used for the synthesis of the prepolymer.

34. The method according to claim 26 or 27, wherein 4,4'-diphenylmethane diisocyanate is used for the synthesis of the prepolymer.

35. The method according to claim 26 or 27, wherein the homogenization of the polyurethane-rubber mixture is carried up during extrusion process, using a single screw or twin screws extruder, the temperature of head and the plasticizing zones in the range from 100 to 250°C.

36. Method for obtaining of thermoplastic polyurethane-rubber composite, **characterized in that** the method is carried out in two stages:
- in the first stage: a mixture of rubber granulate with a modifier containing isocyanate and/or epoxy groups is obtained in the way of that powdered modifier with a grain size of no more than 1 mm is being mixed with a rubber granules with a grain size equal or below 1 mm, while the amount of rubber granulate, calculated on the weight of the composite, is from 9.5% wt. to 80% wt. of mentioned ingredients and the amount of the modifier, calculated on the weight of the composite, is from 1 to 5% wt. of the mentioned ingredients, and then thermoplastic polyurethane granules and/or cast urethane elastomer are being added to the obtained mixture, and the mixture is mixed again, wherein the amount of thermoplastic polyurethane, calculated on the total weight of the composite, is from 19 to 90% wt. of mentioned ingredients;
- in the second stage: the obtained mixture is being subject to further processing by injection molding or extrusion.

37. Method for obtaining of thermoplastic polyurethane-rubber composite, **characterized in that**, the method is carried out in two stages:
- in the first stage: a mixture of a rubber granulate with a thermoplastic polyurethane is obtained in the way that granulate of thermoplastic polyurethane with a grain size of not more than 10 mm is being mixed with rubber waste with a grain size equal or below 1 mm, wherein the amount of rubber waste, calculated on the weight of the composite, is from 19% wt. to 48% wt., and the amount of thermoplastic polyurethane, calculated on the weight of the composite, is from 47% wt. to 80% wt., and then the mixture is being homogenized using an extruder, resulting in a polyurethane-rubber extrudate being obtained, which is then granulated to a homogeneous polyurethane-rubber granulate with a grain size no more than 5 mm using a knife granulator, the obtained polyurethane-rubber granulate is then being mixed with isocyanate and/or epoxy modifier, the amount of the modifier, calculated on the weight of the composite, is at least 1% wt., preferably up to 5% wt.;
- in the second stage, the obtained mixture is being subject to further processing by injection into ready-made consumer goods using known injection molding equipment.
